(19) Europäisches Patentamt / European Patent Office / Office européen des brevets

(11) **EP 4 318 668 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
***H01M 4/525*** *(2010.01)*

(21) Application number: **22929201.6**

(86) International application number:
**PCT/CN2022/101030**

(22) Date of filing: **24.06.2022**

(87) International publication number:
**WO 2023/245597 (28.12.2023 Gazette 2023/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **LIN, Zehui**
  **Ningde City, Fujian 352100 (CN)**
- **NI, Huan**
  **Ningde City, Fujian 352100 (CN)**
- **LIU, Hongyu**
  **Ningde City, Fujian 352100 (CN)**

(74) Representative: **Kraus & Lederer Patentanwälte PartGmbB et al**
**Thomas-Wimmer-Ring 15**
**80539 München (DE)**

(54) **POSITIVE ELECTRODE ACTIVE MATERIAL, SECONDARY BATTERY, BATTERY MODULE, BATTERY PACK AND ELECTRIC DEVICE**

(57) The present application relates to a positive electrode active material, comprising an active material A having a composition formula of $Li_{x1}Ni_{a1}Co_{b1}Mn_{c1}O_{2-y1}Q_{y1}$ I; an active material B having a composition formula of $Li_{x2}Ni_{a2}Co_{b2}Mn_{c2}O_{2-y2}Q_{y2}$ II; and an active material C having a composition formula of $Li_{x3}Ni_{a3}Co_{b3}Mn_{c3}O_{2-y3}Q_{y3}$ III, wherein the subscripts in formulae I, II and III are as defined in the description; and wherein the active material A has an average particle size Dv50 greater than both the average particle size Dv50 of the active material B and the average particle size Dv50 of the active material C. The positive electrode active material of the present application has a large compacted density, such that the corresponding battery has not only a high energy density and safety performance, but also a good high-temperature cycling performance and high-temperature storage performance.

EP 4 318 668 A1

**Description**

**Technical Field**

The present application relates to the technical field of lithium batteries, and in particular to a positive electrode active material, a secondary battery, a battery module, a battery pack, and a power consuming device.

**Background Art**

In recent years, with the increasingly wide application range of lithium-ion batteries, lithium-ion batteries are widely used in energy storage power systems such as hydroelectric, thermal, wind and solar power stations, as well as power tools, electric bicycles, electric motorcycles, electric vehicles, military equipment, aerospace and other fields. Due to the great development of lithium ion batteries, higher requirements have also been placed on the lithium ion batteries in terms of energy density, cycling performance, safety performance, etc. In addition, since the selection of a positive electrode active material is increasingly limited, a high-nickel positive electrode active material is considered to be the best choice to meet the requirement of high energy density.

However, with the continuous increase of nickel content, the structural stability thereof becomes worse and worse. Coating, doping, etc., are relatively effective means to improve the rate performance, cycling performance and other performance of a material at present. However, all the existing methods will lead to different degrees of damage to the performance of a lithium ion battery. For example, the lithium ion battery will have a lower gram capacity, poorer cycling performance, etc. Therefore, the existing coated or doped positive electrode materials still need to be improved.

**Summary of the Invention**

The present application has been made in view of the above-mentioned problems, and an objective thereof is to provide a positive electrode active material, the corresponding electrode plate of which will have a large compacted density, such that the corresponding battery has not only a high energy density and safety performance, but also a good high-temperature cycling performance and high-temperature storage performance.

To achieve the objective, a first aspect of the present application provides a positive electrode active material, comprising

an active material A having a composition formula of

$$Li_{x1}Ni_{a1}Co_{b1}Mn_{c1}O_{2-y1}Q_{y1} \qquad I$$

wherein in formula I, $0.95 \leq x1 \leq 1.3$, $0.7 \leq a1 \leq 0.99$, $0.01 \leq b1 \leq 0.15$, $0.01 \leq c1 \leq 0.3$, $a1+b1+c1 = 1$, and $0 \leq y1 \leq 0.1$; and Q is one or more selected from S, N, F, Cl, Br and I;
an active material B having a composition formula of

$$Li_{x2}Ni_{a2}Co_{b2}Mn_{c2}O_{2-y2}Q_{y2} \qquad II$$

wherein in formula II, $0.95 \leq x2 \leq 1.3$, $0.7 \leq a2 \leq 0.99$, $0.01 \leq b2 \leq 0.15$, $0.01 \leq c2 \leq 0.3$, $a2+b2+c2 = 1$, and $0 \leq y2 \leq 0.1$; and Q is one or more selected from S, N, F, Cl, Br and I; and
an active material C having a composition formula of

$$Li_{x3}Ni_{a3}Co_{b3}Mn_{c3}O_{2-y3}Q_{y3} \qquad III$$

wherein in formula III, $0.95 \leq x3 \leq 1.3$, $0.3 \leq a3 < 0.7$, $0.01 \leq b3 \leq 0.15$, $0.01 \leq c3 \leq 0.5$, $a3+b3+c3 = 1$, and $0 \leq y3 \leq 0.1$; and Q is one or more selected from S, N, F, Cl, Br and I;
wherein the active material A has an average particle size Dv50 greater than both the average particle size Dv50 of the active material B and the average particle size Dv50 of the active material C.

Therefore, the positive electrode active material of the present application comprises active materials A, B, and C which have different average particle sizes and nickel contents, such that the corresponding electrode plate thereof has a large compacted density, which enables the corresponding battery to have not only a high energy density and safety performance, but also a good high-temperature cycling performance and high-temperature storage performance.

In any embodiment, the active material A has an average particle size Dv50 of 7-15 $\mu$m, optionally 8-14 $\mu$m, and a Dv90 of 15-25 $\mu$m, optionally 18-22 $\mu$m; the active material B has an average particle size Dv50 of 1-8 $\mu$m,

optionally 2-5 $\mu$m, and a Dv90 of 3-10 $\mu$m, optionally 5-8 $\mu$m; and the active material C has an average particle size of 1-7 $\mu$m, optionally 2-5 $\mu$m, and a Dv90 of 5-10 $\mu$m, optionally 5-8 $\mu$m. Therefore, by means of further defining the average particle size of each active material, the compacted density of a positive electrode plate comprising the positive electrode active material is further improved, such that the corresponding battery has not only a high energy density and safety performance, but also a good high-temperature cycling performance and high-temperature storage performance.

In any embodiment, the content ratio of the active material A, the active material B, and the active material C is 1 : 0.5-8 : 0.1-10, optionally 1 : 0.8-6 : 0.2-8, further optionally 1 : 1.5-6 : 3-8. Therefore, by means of the specific proportions of the active materials, it is further to enable a positive electrode plate comprising the positive electrode active material to have a large compacted density, such that the corresponding battery has not only a high energy density and safety performance, but also a good high-temperature cycling performance and high-temperature storage performance.

In any embodiment, the sum of the contents of the active material A and the active material B equals to the content of the active material C, the content of each active material being based on the total weight of the positive electrode active material. Therefore, by means of the specific content of each active material, it is further to enable a positive electrode plate comprising the positive electrode active material to have a large compacted density, such that the corresponding battery has not only a high energy density and safety performance, but also a good high-temperature cycling performance and high-temperature storage performance.

In any embodiment, the positive electrode active material has a specific surface area of 0.3-1.8 m$^2$/g, and a compacted density of 3.0-3.6 g/cm$^3$. Therefore, the positive electrode active material having a particular specific surface area and compacted density enables the corresponding battery to have not only a high energy density and safety performance, but also a good high-temperature cycling performance and high-temperature storage performance.

In any embodiment, the active material A and/or the active material B and/or the active material C comprise(s) an M element, wherein M is selected from one or more of Zr, Sr, B, Ti, Mg, Sn and Al. Therefore, by means of subjecting the active materials to the above treatment, the surface phase structure of the material can be stabilized, the side reactions during the charge/discharge process can be inhibited, which further enable the corresponding battery to have not only a high energy density and safety performance, but also a good high-temperature cycling performance and high-temperature storage performance.

In any embodiment, in the chemical formula respectively corresponding to the active material A, the active material B, and the active material C, x1 : x2 : x3 is 1 : (0.73-1.37) : (0.73-1.37), and a1 : a2 : a3 is 1 : (0.71-1.42) : (0.31-1). Therefore, by means of defining the ratios of lithium and nickel in each active material, it is further to enable the corresponding battery to have not only a high energy density and safety performance, but also a good high-temperature cycling performance and high-temperature storage performance.

In any embodiment, the active material A is a polycrystal material, and the active materials B and C are mono-like crystal or monocrystal materials. Therefore, by means of defining the crystal type of each active material, it is further to enable the corresponding battery to have not only a high energy density and safety performance, but also a good high-temperature cycling performance and high-temperature storage performance.

A second aspect of the present application further provides a secondary battery, characterized by comprising a positive electrode active material of the first aspect of the present application.

Therefore, the resulting battery has not only a high energy density and safety performance, but also a good high-temperature cycling performance and high-temperature storage performance.

A third aspect of the present application provides a battery module, comprising a secondary battery of the second aspect of the present application.

A fourth aspect of the present application provides a battery pack, comprising a battery module of the third aspect of the present application.

A fifth aspect of the present application provides a power consuming device, comprising at least one selected from a secondary battery of the second aspect of the present application, a battery module of the third aspect of the present application or a battery pack of the fourth aspect of the present application.

The positive electrode active material of the present application comprises active materials A, B, and C which have different average particle sizes and nickel contents, such that the positive electrode plate comprising the positive electrode active material has a large compacted density, thus making the corresponding battery to have not only a high energy density and safety performance, but also a good high-temperature cycling performance and high-temperature storage performance.

**Brief Description of the Drawings**

Fig. 1 shows a schematic diagram of a secondary battery according to an embodiment of the present application.

Fig. 2 shows an exploded view of the secondary battery according to an embodiment of the present application as shown in Fig. 1.

Fig. 3 shows a schematic diagram of a battery module according to an embodiment of the present application.

Fig. 4 shows a schematic diagram of a battery pack according to an embodiment of the present application.

Fig. 5 shows an exploded view of the battery pack according to an embodiment of the present application as shown in Fig. 4.

Fig. 6 shows a schematic diagram of a power consuming device using a secondary battery according to an embodiment of the present application as a power source.

List of reference numerals:

1 - battery pack; 2 - upper box body; 3 - lower box body; 4 - battery module; 5 - secondary battery; 51 - housing; 52 - electrode assembly; 53 - top cover assembly

**Detailed Description of Embodiments**

Hereinafter, embodiments of the positive electrode active material and the preparation method therefor, the positive electrode plate, the secondary battery, the battery module, the battery pack, and the electrical device of the present application are described in detail and specifically disclosed with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application may be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Currently, the conventional high-nickel positive electrode active materials are mainly composed of secondary particles in the form of agglomeration and polycrystals. For the high-nickel positive electrode active material, as the Ni content increases, the gram capacity of the material also increases. However, the high-nickel polycrystal secondary particle material still has the following problems: 1) the packing density thereof is low, such that the electrode plate made therefrom has a low compacted density, and the specific energy of a battery is further reduced; and 2) the particles are extremely prone to fragmentation, leading to an increase in the specific surface area of the material, which in turn leads to an increase in side reactions, serious gas production, etc. in the battery. The applicants have found through researches that the positive electrode active material of the first aspect of the present application comprises active materials A, B, and C which have different average particle sizes and nickel contents, such that the positive electrode plate comprising the positive electrode active material has a large compacted density, and the performance deterioration problems of the high-nickel positive electrode active materials during the cold pressing and cycling processes in the prior art, such as particle breakage along grain boundaries, increase in the specific surface area, destruction of electron/ion transport paths, and electrolyte solution corrosions, are effectively solved, which make the corresponding battery to have not only a high energy density and safety performance, but also a good high-temperature cycling performance and high-temperature storage performance.

**Positive electrode active material**

In one embodiment of the present application, the present application proposes

a positive electrode active material, comprising
an active material A having a composition formula of

$$Li_{x1}Ni_{a1}Co_{b1}Mn_{c1}O_{2-y1}Q_{y1} \qquad I$$

wherein in formula I, $0.95 \leq x1 \leq 1.3$, $0.7 \leq a1 \leq 0.99$, $0.01 \leq b1 \leq 0.15$, $0.01 \leq c1 \leq 0.3$, $a1+b1+c1 = 1$, and $0 \leq y1 \leq 0.1$; and Q is one or more selected from S, N, F, Cl, Br and I;
an active material B having a composition formula of

$$Li_{x2}Ni_{a2}Co_{b2}Mn_{c2}O_{2-y2}Q_{y2} \qquad II$$

wherein in formula II, $0.95 \leq x2 \leq 1.3$, $0.7 \leq a2 \leq 0.99$, $0.01 \leq b2 \leq 0.15$, $0.01 \leq c2 \leq 0.3$, $a2+b2+c2 = 1$, and $0 \leq y2 \leq 0.1$; and Q is one or more selected from S, N, F, Cl, Br and I; and
an active material C having a composition formula of

$$Li_{x3}Ni_{a3}Co_{b3}Mn_{c3}O_{2-y3}Q_{y3} \qquad III$$

wherein in formula III, $0.95 \leq x3 \leq 1.3$, $0.3 \leq a3 < 0.7$, $0.01 \leq b3 \leq 0.15$, $0.01 \leq c3 \leq 0.5$, $a3+b3+c3 = 1$, and $0 \leq y3 \leq 0.1$; and Q is one or more selected from S, N, F, Cl, Br and I;
wherein the active material A has an average particle size Dv50 greater than both the average particle size Dv50 of the active material B and the average particle size Dv50 of the active material C.

The applicants have found through researches that the positive electrode active material of the present application comprises active materials A, B, and C which have different average particle sizes and nickel contents, such that the positive electrode plate comprising the positive electrode active material has a large compacted density, and the performance deterioration problems of the high-nickel positive electrode active materials during the cold pressing and cycling processes in the prior art, such as particle breakage along grain boundaries, increase in the specific surface area, destruction of electron/ion transport paths, and electrolyte solution corrosions, are effectively solved, which make the corresponding battery to have not only a high energy density and safety performance, but also a good high-temperature cycling performance and high-temperature storage performance.

In some embodiments, the active material A has an average particle size Dv50 of 7-15 $\mu$m, optionally 8-14 $\mu$m, and a Dv90 of 15-25 $\mu$m, optionally 18-22 $\mu$m; the active material B has an average particle size Dv50 of 1-8 $\mu$m, optionally 2-5 $\mu$m, and a Dv90 of 3-10 $\mu$m, optionally 5-8 $\mu$m; and the active material C has an average particle size of 1-7 $\mu$m, optionally 2-5 $\mu$m, and a Dv90 of 5-10 $\mu$m, optionally 5-8 $\mu$m. Therefore, by means of further defining the average particle size of each active material, the compacted density of the positive electrode active material is further improved, such that the corresponding battery has not only a high energy density and safety performance, but also a good high-temperature cycling performance and high-temperature storage performance.

In some embodiments, the active material A has a Dv10 of 1-4 $\mu$m, preferably 2-3 $\mu$m, and a Dv99 of 20-30 $\mu$m, preferably 24-28 $\mu$m.

The active material B has a Dv10 of 1-3 $\mu$m, preferably 1-2$\mu$m, and a Dv99 of 4-12 $\mu$m, preferably 6-10 $\mu$m.

The active material C has a Dv10 of 1-3 $\mu$m, preferably 1.5-2.5 $\mu$m, and a Dv99 of 6-15 $\mu$m, preferably 7-13 $\mu$m.

The Dv10 is the corresponding particle size when the cumulative volume distribution percentage of a sample reaches 10%; the Dv50 is the corresponding particle size when the cumulative volume distribution percentage of a sample reaches 50%, also called as the average particle size; the Dv90 is the corresponding particle size when the cumulative volume distribution percentage of a sample reaches 90%; and the Dv99 is the corresponding particle size when the cumulative volume distribution percentage of a sample reaches 99%.

In one preferred embodiment, the active material A has an average particle size Dv50 of 11.5-12.5 $\mu$m, the active material B has an average particle size Dv50 of 3.8-4.2 $\mu$m, and the active material C has an average particle size Dv50 of 3.8-4.2 $\mu$m.

The particle size of the positive electrode active material above has a well-known meaning in the art, which is based on the determination of the volume particle size of the positive electrode active material and the distribution thereof by means of a laser particle size analyzer, for example, the Mastersizer 3000 type laser particle size analyzer of Malvern Instruments Co., Ltd., UK.

In some embodiments, the content ratio of the active material A, the active material B, and the active material C is 1 : 0.5-8 : 0.1-10, optionally 1 : 0.8-6 : 0.2-8, further optionally 1 : 1.5-6 : 3-8, most preferably 1 : 1.5-4 : 2.5-5. Therefore, by means of the specific proportions of the active materials, it is further to enable a positive electrode plate comprising the positive electrode active material to have a large compacted density, such that the corresponding battery has not only a high energy density and safety performance, but also a good high-temperature cycling performance and high-temperature storage performance. The contents are all based on the total weight of the positive electrode active material.

In some embodiments, the sum of the contents of the active material A and the active material B equals to the content of the active material C, the content of each active material being based on the total weight of the positive electrode active material. Therefore, by means of the specific content of each active material, it is further to enable a positive electrode plate comprising the positive electrode active material to have a large compacted density, such that the corresponding battery has not only a high energy density and safety performance, but also a good high-temperature cycling performance and high-temperature storage performance.

In some embodiments, the content of the active material A is 2-98 wt%, preferably 10-90 wt%, further preferably 30-70 wt%, and more preferably 20-60 wt%, based on the total weight of the positive electrode active material. The content of the active material B is 2-98 wt%, preferably 10-80 wt%, further preferably 15-60 wt%, and more preferably 20-40 wt%, based on the total weight of the positive electrode active material. The content of the active material C is 2-98 wt%, preferably 10-80 wt%, further preferably 10-70 wt%, and more preferably 10-50 wt%, based on the total weight of the positive electrode active material.

In some embodiments, the positive electrode active material has a specific surface area of 0.3-1.8 m$^2$/g, optionally 0.3-0.8 m$^2$/g, 0.6-0.8 m$^2$/g, 0.8-1.0 m$^2$/g, or 1.0-1.8 m$^2$/g. Therefore, the positive electrode active material having a particular specific surface area and compacted density enables the corresponding battery to have not only a high energy density and safety performance, but also a good high-temperature cycling performance and high-temperature storage performance.

In some embodiments, the active material A and/or the active material B and/or the active material C comprise(s) an M element, wherein M is selected from one or more of Zr, Sr, B, Ti, Mg, Sn and Al, preferably Ti or Al. Therefore, by means of subjecting the active materials to the above treatment, the surface phase structure of the material can be stabilized, the side reactions during the charge/discharge process can be inhibited, which further enable the corresponding battery to have not only a high energy density and safety performance, but also a good high-temperature cycling performance and high-temperature storage performance.

In some embodiments, the active material A and/or the active material B and/or the active material C are/is coated with an M element, wherein M is as described above. The coating is performed by means of a method known to those skilled in the art, for example, a dry coating or liquid phase coating process.

In some embodiments, in the chemical formula respectively corresponding to the active material A, the active material B, and the active material C, x1 : x2 : x3 is 1 : (0.73-1.37) : (0.73 -1.37), optionally 1 : (0.9-1.1): (0.9-1.1), and a1 : a2 : a3 is 1 : (0.71-1.42): (0.31 - 1), optionally 1 : (0.95-1.11) : (0.55-0.75). Therefore, by means of defining the ratios of lithium and nickel in each active material, it is further to enable the corresponding battery to have not only a high energy density and safety performance, but also a good high-temperature cycling performance and high-temperature storage performance.

In some embodiments, the active material A is a polycrystal material, and the active materials B and C are mono-like crystal or monocrystal materials. Therefore, by means of defining the crystal type of each active material, it is further to enable the corresponding battery to have not only a high energy density and safety performance, but also a good high-temperature cycling performance and high-temperature storage performance.

In the present application, the term "mono-like crystal" refers to the primary particles having an average particle size Dv50 greater than 1 $\mu$m and with a small amount of agglomeration. The term "monocrystal" refers to the primary particles having an average particle size Dv50 greater than 1 $\mu$m, with no obvious agglomeration, and having fewer grain boundaries. The term "polycrystal" refers to the secondary particles composed of primary particles. The "primary particles" are usually in the form of micron sized dispersed single particles; and the "secondary particles" are usually spherical particles that are formed by the agglomeration of many particles (100-500 nanometers) and have quite a lot of grain boundaries. The monocrystal positive electrode active material is composed of primary particles, has a small surface area, a large mechanical strength and large compacted density and is less prone to be crushed. When the proportion of the polycrystal nickel-containing active material to the monocrystal nickel-containing active material is appropriately adjusted, not only can it ensure the energy density of a battery, but also ensure that the battery has an excellent high-temperature performance.

A second aspect of the present application further provides a secondary battery, characterized by comprising a positive electrode active material of the first aspect of the present application.

Therefore, the resulting battery has not only a high energy density and safety performance, but also a good high-temperature cycling performance and high-temperature storage performance.

The secondary battery, battery module, battery pack, and power consuming device of the present application will be described below by appropriately referring to the accompanying drawings.

In one embodiment of the present application, a secondary battery is provided.

Typically, a secondary battery comprises a positive electrode plate, a negative electrode plate, an electrolyte and a separator. During the charge/discharge of the battery, active ions are intercalated and de-intercalated back and forth between a positive electrode plate and a negative electrode plate. The electrolyte functions to conduct ions between the positive electrode plate and the negative electrode plate. The separator is provided between the positive electrode plate and the negative electrode plate, and mainly prevents the positive and negative electrodes from short-circuiting and enables ions to pass through.

[Positive electrode plate]

The positive electrode plate comprises a positive electrode current collector and a positive electrode film layer provided on at least one surface of the positive electrode current collector, the positive electrode film layer comprising the positive electrode active material of the first aspect of the present application.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material may further comprise a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, etc. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPO_4$), lithium manganese phosphate and carbon composites, lithium iron manganese phosphate, and lithium iron manganese phosphate and carbon composites. The weight percentage of the positive electrode active material in the positive electrode film layer is 80-100 wt%, based on the total weight of the positive electrode film layer.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight percentage of the binder in the positive electrode film layer is 0-20 wt%, based on the total weight of the positive electrode film layer.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers. The weight percentage of the conductive agent in the positive electrode film layer is 0-20 wt%, based on the total weight of the positive electrode film layer.

In some embodiments, the positive electrode plate can be prepared as follows: the above-mentioned components for preparing the positive electrode plate, such as a positive electrode active material, a conductive agent, a binder and any other components, are dispersed in a solvent (e.g., N-methylpyrrolidone) to form a positive electrode slurry, wherein the positive electrode slurry has a solid content of 40-80 wt%, and the viscosity at room temperature thereof is adjusted to 5000-25000 mPa·s; and the positive electrode slurry is coated onto the surface of the positive electrode current collector, dried and then cold pressed by means of a cold-rolling mill to form a positive electrode plate, wherein the unit surface density of the positive electrode powder coating is 150-350 mg/m$^2$, and the positive electrode plate has a compacted density of 3.0-3.6 g/cm$^3$, optionally 3.3-3.5 g/cm$^3$. The compacted density is calculated according to the following equation:

$$\text{the compacted density} = \text{the surface density of the coating}/(\text{the thickness of the electrode plate after pressing} - \text{the thickness of the current collector}).$$

[Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more. The weight percentage of the negative electrode active material in the negative electrode film layer is 70-100 wt%, based on the total weight of the negative electrode film layer.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The weight percentage of the binder in the negative electrode film layer is 0-30 wt%, based on the total weight of the negative electrode film layer.

In some embodiments, the negative electrode film layer may optionally comprise a conductive agent. The conductive agent may be selected from at least one of superconductive carbon, acetylene black, carbon black, ketjenblack, carbon dots, carbon nanotubes, graphene, and carbon nanofibers. The weight percentage of the conductive agent in the negative electrode film layer is 0-20 wt%, based on the total weight of the negative electrode film layer.

In some embodiments, the negative electrode film layer may optionally comprise other auxiliary agents, such as thickener (e.g. sodium carboxymethyl cellulose (CMC-Na)), etc. The weight percentage of the other auxiliary agents in the negative electrode film layer is 0-15 wt%, based on the total weight of the negative electrode film layer.

In some embodiments, the negative electrode plate can be prepared as follows: the above-mentioned components for preparing the negative electrode plate, such as a negative electrode active material, a conductive agent, a binder and any other components, are dispersed in a solvent (e.g., deionized water) to form a negative electrode slurry, wherein the negative electrode slurry has a solid content of 30-70 wt%, and the viscosity at room temperature thereof is adjusted to 2000-10000 mPa·s; and the resulting negative electrode slurry is coated onto a negative electrode current collector, followed by a drying procedure and cold pressing (e.g., double rollers), so as to obtain the negative electrode plate. The unit surface density of the negative electrode powder coating is 75-220 $mg/m^2$, and the negative electrode plate has a compacted density of 1.2-2.0 $g/cm^3$.

[Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis-fluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO$_2$F$_2$), lithium bisoxalatodifluorophosphate (LiDFOP) and lithium tetrafluorooxalate phosphate (LiTFOP). The concentration of the electrolyte salt is typically 0.5-5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

[Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, the thickness of the separator is 6-40 um, optionally 12-20 um.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

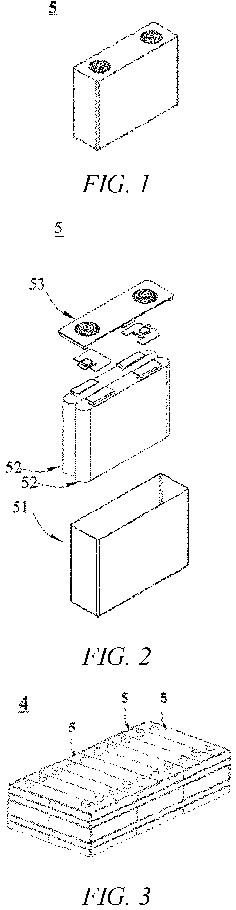

The shape of the secondary battery is not particularly limited in the present application and may be cylindrical, square or of any other shape. For example, Fig. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 3 shows a battery module 4 as an example. Referring to Fig. 3, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may further comprise an outer shell with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

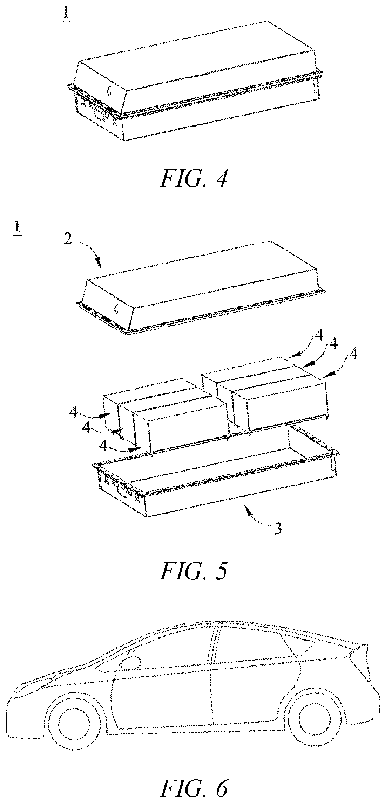

Fig. 4 and Fig. 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. A plurality of battery modules 4 may be arranged in the battery box in any manner.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

Examples

In order to make the technical problems solved by the present application, the technical solutions and the beneficial effects clearer, further detailed description of the present application will be given below with reference to the examples and the accompanying drawings. Apparently, the described examples are merely some, rather than all, of the examples of the present application. The following description of at least one exemplary example is merely illustrative in nature and is in no way to limit the present application and the use thereof. All other examples obtained by those of ordinary skill in the art based on the examples of the present application without involving any inventive effort shall fall within the scope of protection of the present application.

The examples in which techniques or conditions are not specified are based on the techniques or conditions described in documents in the art or according to the product introduction. The reagents or instruments used therein for which manufacturers are not specified are all conventional products that are commercially available.

I. Preparation example

Preparation of positive electrode active material

Preparation example 1

(1) Preparation of positive electrode active material precursor: in a container of a continuous stirred tank reactor, nickel sulfate, manganese sulfate, and cobalt sulfate are added to deionized water at a molar ratio of Ni : Co : Mn = 8 : 1 : 1 (based on each element) to prepare a transition metal salt solution solution with a total molarity of 2 mol/L, and then 4 mol/L sodium hydroxide as a precipitant and 0.4 mol/L ammonia water as a complexing agent are added for a co-precipitation reaction at a pH of 11.3 for 24 hours to prepare a precursor $Ni_{0.8}Co_{0.1}Mn_{0.1}(OH)_2$ of a large-particle lithium polycrystal ternary positive electrode material A; nickel sulfate, manganese sulfate, and cobalt sulfate are added to deionized water at a molar ratio of Ni : Co : Mn = 8 : 1 : 1 to prepare a transition metal salt solution solution with a total molarity of 2 mol/L, and then 4 mol/L sodium hydroxide as a precipitant and 0.4 mol/L ammonia water as a complexing agent are added for a co-precipitation reaction at a pH of 11.4 for 24 hours to prepare a precursor $Ni_{0.8}Co_{0.1}Mn_{0.1}(OH)_2$ of a small-particle monocrystal ternary positive electrode active material B; nickel sulfate, manganese sulfate, and cobalt sulfate are added to deionized water at a molar ratio of Ni : Co : Mn = 55 : 12 : 33 to prepare a transition metal salt solution solution with a total molarity of 2 mol/L, and then 4 mol/L sodium hydroxide as a precipitant and 0.4 mol/L ammonia water as a complexing agent are added for a co-precipitation reaction at a pH of 11.4 for 24 hours to prepare a precursor $Ni_{0.55}Co_{0.12}Mn_{0.33}(OH)_2$ of a small-particle monocrystal ternary positive electrode active material C.

(2) Method for preparing the positive electrode active material A: the above precursor $Ni_{0.8}Co_{0.1}Mn_{0.1}(OH)_2$ of the positive electrode active material A and a Li-containing compound $LiOH \cdot H_2O$ at a molar ratio of 1 : 1.05 are charged into a high-speed mixer for mixing, then placed into a furnace for sintering at 800°C for 5 hours, cooled to room temperature, and then charged into a airflow mill for mechanical milling for 5 hours to obtain the positive electrode active material A, $Li(Ni_{0.8}Co_{0.1}Mn_{0.1})O_2$; the above positive electrode active material A and 0.3 wt% of $Al_2O_3$ based on the active material A are charged into a high-speed mixer for mixing and then placed into a furnace for sintering at 500°C for 5 hours to form a coating layer of the positive electrode active material A, thus obtaining the surface-modified positive electrode active material A.

(3) Method for preparing the positive electrode active material B: the above precursor $Ni_{0.8}Co_{0.1}Mn_{0.1}(OH)_2$ of the positive electrode active material B and a Li-containing compound $LiOH \cdot H_2O$ at a molar ratio of 1 : 1.05 are charged into a high-speed mixer for mixing, then placed into a furnace for sintering at 850°C for 5 hours, cooled to room temperature, and then mechanically milled by means of a airflow mill for 5 hours to obtain the positive electrode active material B, $Li(Ni_{0.8}Co_{0.1}Mn_{0.1})O_2$; the above positive electrode active material B and 0.2 wt% of a $Al_2O_3$ compound containing a coating element Al are charged into a coulter roller/high-speed mixer for mixing and then placed into a furnace for sintering at 500°C for 5 hours to form a coating layer of the positive electrode active material B, thus obtaining the surface-modified positive electrode active material B.

(4) Method for preparing the positive electrode active material C: the above precursor $Ni_{0.55}Co_{0.12}Mn_{0.33}(OH)_2$ of the positive electrode active material C and a Li-containing lithium carbonate compound at a molar ratio of 1 : 1.1 are charged into a high-speed mixer for mixing, then placed into a furnace for sintering at 700°C for 5 hours, cooled to room temperature, and then mechanically milled by means of a airflow mill for 5 hours to obtain the positive electrode active material C, $Li(Ni_{0.55}Co_{0.12}Mn_{0.33})O_2$; the above positive electrode active material C and 0.2 wt% of a mixture of aluminum oxide $Al_2O_3$ and titanium oxide $TiO_2$ at a mass ratio of 1 : 1 are charged into a high-speed mixer for mixing and then placed into a furnace for sintering at 500°C for 5 hours to form a coating layer of the positive electrode active material C, thus obtaining the surface-modified positive electrode active material C.

(5) the positive electrode active material A, the positive electrode active material B, and the positive electrode active material C described above at a mass ratio of 7 : 2 : 1 are charged into a high-speed mixer for uniformly mixing, thus obtaining the positive electrode active material of the present invention. The parameters of the positive electrode active material are summarized in Table 1.

The preparation methods for the positive electrode active materials of examples 2-19 and the positive electrode active materials of comparative examples 1-8 are similar to that for the positive electrode active material of example 1, except that the type, composition, particle size, and crystal type of each active material are changed, see Table 1 for details of different product parameters.

Table 1 Relevant parameters of positive electrode active materials of examples and comparative examples

| No. | Positive electrode active material | | | | | | | Weight ratio of A: B : C | Specific surface area m$^2$/g | Compacted density g/cm$^3$ |
|---|---|---|---|---|---|---|---|---|---|---|
| | A | | B | | C | | | | | |
| | Type | $D_{v50}$ | Type | $D_{v50}$ | Type | $D_{v50}$ | | | | |
| 1 | $LiNi_{0.8}Co_{0.1}Mn_{0.1}O_2$ | 12.1 | $LiNi_{0.8}Co_{0.1}Mn_{0.1}O_2$ | 3.9 | $LiNi_{0.55}Co_{0.12}Mn_{0.33}O_2$ | 4 | 7 : 2 : 1 | 0.61 | 3.31 |
| 2 | $LiNi_{0.8}Co_{0.1}Mn_{0.1}O_2$ | 12 | $LiNi_{0.8}Co_{0.1}Mn_{0.1}O_2$ | 4.1 | $LiNi_{0.55}Co_{0.12}Mn_{0.33}O_2$ | 4.1 | 6 : 3 : 1 | 0.63 | 3.35 |
| 3 | $LiNi_{0.8}Co_{0.1}Mn_{0.1}O_2$ | 12 | $LiNi_{0.8}Co_{0.1}Mn_{0.1}O_2$ | 4 | $LiNi_{0.55}Co_{0.12}Mn_{0.33}O_2$ | 4 | 5 : 4 : 1 | 0.68 | 3.32 |
| 4 | $LiNi_{0.8}Co_{0.1}Mn_{0.1}O_2$ | 11.9 | $LiNi_{0.8}Co_{0.1}Mn_{0.1}O_2$ | 4 | $LiNi_{0.55}Co_{0.12}Mn_{0.33}O_2$ | 4 | 3 : 2 : 5 | 0.72 | 3.33 |
| 5 | $LiNi_{0.8}Co_{0.1}Mn_{0.1}O_2$ | 12 | $LiNi_{0.8}Co_{0.1}Mn_{0.1}O_2$ | 3.9 | $LiNi_{0.55}Co_{0.12}Mn_{0.33}O_2$ | 4.2 | 2 : 3 : 5 | 0.75 | 3.34 |
| 6 | $LiNi_{0.8}Co_{0.1}Mn_{0.1}O_2$ | 12.2 | $LiNi_{0.8}Co_{0.1}Mn_{0.1}O_2$ | 3.9 | $LiNi_{0.55}Co_{0.12}Mn_{0.33}O_2$ | 4.1 | 1 : 4 : 5 | 0.77 | 3.36 |
| 7 | $LiNi_{0.90}Co_{0.05}Mn_{0.05}O_2$ | 13.4 | $LiNi_{0.90}Co_{0.05}Mn_{0.05}O_2$ | 3.6 | $LiNi_{0.60}Co_{0.10}Mn_{0.30}O_2$ | 3.8 | 6 : 3 : 1 | 0.62 | 3.4 |
| 8 | $LiNi_{0.70}Co_{0.15}NM_{0.15}O_2$ | 13.9 | $LiNi_{0.96}Co_{0.02}Mn_{0.02}O_2$ | 3.5 | $LiNi_{0.60}Co_{0.10}Mn_{0.30}O_2$ | 3.7 | 6 : 3 : 1 | 0.63 | 3.41 |
| 9 | $LiNi_{0.8}Co_{0.1}Mn_{0.1}O_2$ | 14.8 | $LiNi_{0.96}Co_{0.02}Mn_{0.02}O_2$ | 3.8 | $LiNi_{0.60}Co_{0.10}Mn_{0.30}O_2$ | 3.8 | 6 : 3 : 1 | 0.65 | 3.41 |
| 10 | $LiNi_{0.8}Co_{0.1}Mn_{0.1}O_2$ | 12 | $LiNi_{0.8}Co_{0.1}Mn_{0.1}O_2$ | 3.9 | $LiNi_{0.60}Co_{0.10}Mn_{0.30}O_2$ | 3.7 | 6 : 3 : 1 | 0.63 | 3.42 |
| 11 | $LiNi_{0.8}Co_{0.1}Mn_{0.1}O_2$ | 15 | $LiNi_{0.8}Co_{0.1}Mn_{0.1}O_2$ | 3.9 | $LiNi_{0.55}Co_{0.12}Mn_{0.33}O_2$ | 4.1 | 1 : 4 : 5 | 0.77 | 3.36 |
| 12 | $LiNi_{0.8}Co_{0.1}Mn_{0.1}O_2$ | 12.8 | $LiNi_{0.96}Co_{0.02}Mn_{0.02}O_2$ | 3.9 | $LiNi_{0.55}Co_{0.12}Mn_{0.33}O_2$ | 4.1 | 1 : 4 : 5 | 0.77 | 3.36 |
| 13 | $LiNi_{0.8}Co_{0.1}Mn_{0.1}O_2$ | 12.2 | $LiNi_{0.8}Co_{0.1}Mn_{0.1}O_2$ | 4.5 | $LiNi_{0.55}Co_{0.12}Mn_{0.33}O_2$ | 4.1 | 1 : 4 : 5 | 0.77 | 3.36 |
| 14 | $LiNi_{0.8}Co_{0.1}Mn_{0.1}O_2$ | 12.2 | $LiNi_{0.8}Co_{0.1}Mn_{0.1}O_2$ | 4.8 | $LiNi_{0.55}Co_{0.12}Mn_{0.33}O_2$ | 4.1 | 1 : 4 : 5 | 0.77 | 3.36 |
| 15 | $LiNi_{0.8}Co_{0.1}Mn_{0.1}O_2$ | 12.2 | $LiNi_{0.8}Co_{0.1}Mn_{0.1}O_2$ | 3.9 | $LiNi_{0.60}Co_{0.10}Mn_{0.30}O_2$ | 4.1 | 1 : 4 : 5 | 0.77 | 3.36 |
| 16 | $LiNi_{0.8}Co_{0.1}Mn_{0.1}O_2$ | 12.2 | $LiNi_{0.8}Co_{0.1}Mn_{0.1}O_2$ | 3.9 | $LiNi_{0.70}Co_{0.20}Mn_{0.20}O_2$ | 4.1 | 1 : 4 : 5 | 0.77 | 3.36 |
| 17 | $LiNi_{0.8}Co_{0.1}Mn_{0.1}O_2$ | 12.2 | $LiNi_{0.8}Co_{0.1}Mn_{0.1}O_2$ | 3.9 | $LiNi_{0.55}Co_{0.12}Mn_{0.33}O_2$ | 4.5 | 1 : 4 : 5 | 0.77 | 3.36 |
| 18 | $LiNi_{0.8}Co_{0.1}Mn_{0.1}O_2$ | 12.2 | $LiNi_{0.8}Co_{0.1}Mn_{0.1}O_2$ | 3.9 | $LiNi_{0.55}Co_{0.12}Mn_{0.33}O_2$ | 5 | 1 : 4 : 5 | 0.77 | 3.36 |
| Comparative example 1 | $LiNi_{0.8}Co_{0.1}Mn_{0.1}O_2$ | 12 | No B and c | | | | 10 : 0 : 0 | 0.52 | 3.3 |
| Comparative example 2 | - | | $LiNi_{0.8}Co_{0.1}Mn_{0.1}O_2$ | 14.9 | - | | 0 : 10 : 0 | 0.67 | 3.35 |

| No. | Positive electrode active material | | | | | | | Specific surface area m²/g | Compacted density g/cm³ |
|---|---|---|---|---|---|---|---|---|---|
| | A | | B | | C | | Weight ratio of A: B : C | | |
| | Type | $D_{v50}$ | Type | $D_{v50}$ | Type | $D_{v50}$ | | | |
| Comparative example 3 | - | | - | | $LiNi_{0.55}Co_{0.12}Mn_{0.33}O_2$ | 4.1 | 0 : 0 : 10 | 0.78 | 3.36 |
| Comparative example 4 | $LiNi_{0.8}Co_{0.1}Mn_{0.1}O_2$ | 15 | $LiNi_{0.8}Co_{0.1}Mn_{0.1}O_2$ | 14.8 | - | | 8 : 2 : 0 | 0.75 | 3.5 |
| Comparative example 5 | $LiNi_{0.8}Co_{0.1}Mn_{0.1}O_2$ | 15.1 | - | | $LiNi_{0.55}Co_{0.12}Mn_{0.33}O_2$ | 4 | 8 : 0 : 2 | 0.76 | 3.56 |
| Comparative example 6 | - | | $LiNi_{0.8}Co_{0.1}Mn_{0.1}O_2$ | 15 | $LiNi_{0.55}Co_{0.12}Mn_{0.33}O_2$ | 4.1 | 0:8:2 | 0.77 | 3.45 |
| Comparative example 7 | $LiNi_{0.8}Co_{0.1}Mn_{0.1}O_2$ | 15.1 | $LiNi_{0.8}Co_{0.1}Mn_{0.1}O_2$ | 14.9 | $LiNi_{0.55}Co_{0.12}Mn_{0.33}O_2$ | 4.2 | 9.9 : 0.05 : 0.05 | 0.58 | 3.23 |
| Comparative example 8 | $LiNi_{0.8}Co_{0.1}Mn_{0.1}O_2$ | 15.2 | $LiNi_{0.8}Co_{0.1}Mn_{0.1}O_2$ | 15 | $LiNi_{0.55}Co_{0.12}Mn_{0.33}O_2$ | 4.2 | 0.1 : 0.2 : 0.97 | 0.78 | 3.35 |

II. Application examples

Example 1

1) Preparation of positive electrode plate

The positive electrode active material of preparation example 1, the conductive carbon black SP, and the binder PVDF at a weight ratio of 98 : 1 : 1 are dispersed into a solvent NMP for uniformly mixing to obtain a positive electrode slurry; and the positive electrode slurry is uniformly coated onto a positive electrode current collector, i.e. aluminum foil, followed by drying and cold pressing to obtain a positive electrode plate, wherein the coating amount per unit area of the positive electrode plate is 0.27 g/1540.25 mm$^2$; and the compacted density of the positive electrode plate is summarized in Table 1.

2) Preparation of negative electrode plate

A negative electrode active material, i.e. graphite, a thickening agent, i.e. sodium carboxymethylcellulose, a binder, i.e. butadiene styrene rubber, and a conductive agent, i.e. acetylene black at a mass ratio of 97 : 1 : 1 : 1 are mixed, deionized water is added, and a negative electrode slurry is obtained under the action of a vacuum stirrer; the negative electrode slurry is uniformly coated onto a copper foil; and the copper foil is air dried at room temperature, then transferred to an oven for drying at 120°C for 1 h, followed by cold pressing and slitting to obtain a negative electrode plate, wherein the coating amount per unit area of the negative electrode plate is 0.17 g/1540.25 mm$^2$.

3) Separator

A polypropylene separator with a thickness of 12 $\mu$m is used.

4) Preparation of electrolyte solution

An organic solvent is a mixed solution comprising ethylene carbonate (EC), ethyl methyl carbonate (EMC), and diethyl carbonate (DEC), with the volume ratio of EC, EMC, and DEC being 20 : 20 : 60. In an argon atmosphere glove box with a water content of < 10 ppm, a fully dried lithium salt LiPF6 is dissolved into the organic solvent and mixed until uniform to obtain the electrolyte solution, wherein the concentration of the lithium salt is 1 mol/L.

5) Preparation of battery

The positive electrode plate, the separator, and the negative electrode plate are stacked in sequence, with the separator being located between the positive electrode plate and the negative electrode plate to function for isolation, and wound to form a square bare cell; the square bare cell is put into an aluminum plastic film and then baked at 80°C for water removal; and a corresponding non-aqueous electrolyte solution is injected and the aluminum plastic film was sealed, followed by the procedures such as standing, hot and cold pressing, forming, clamping and capacity grading to obtain a finished battery.
The preparation methods for the secondary batteries in examples 2-19 and the secondary batteries in comparative examples 1-8 are similar to that for the secondary battery in example 1, except that the positive electrode active materials of the corresponding preparation examples are used.

**III. Battery performance test**

1. High-temperature cycling performance test

A battery is put into an oven at 60°C, allowed to stand for 2 h, and subjected to a charge/discharge test when the temperature of the battery is maintained at 60°C. The battery is charged at a constant current of 1C to 3.65 V and continuously charged at the constant voltage until the charging current is less than 0.05C; the process is suspended for 5 min; the battery is discharged at a constant current of 1C to 2.8 V; and the process is suspended for 5 min. One charge/discharge cycle of the battery is as described above and the charge/discharge cycle is repeated continuously until the battery capacity decays to 80% of the initial value, and the number of cycles is recorded.

2. High-temperature gas production test

For the high-temperature gas production test method of the battery, the battery is fully charged at 1C to 4.35 V and then allowed to stand in a thermotank at 70°C for 30 days. The initial volume and the volume after standing for 30 days of the battery are measured by means of a water displacement method to obtain the volume expansion rate of the battery. The volume expansion rate of the battery (%) = (the volume after standing for 30 days /the initial volume - 1) $\times$ 100%.

3. Gram capacity test of battery

For the capacity test of a battery, a lithium ion battery is allowed to stand at a constant-temperature environment at 25°C for 2 h; then at 2.8 V - 4.35 V, the battery is charged at 1/3C to 4.35 V and then charged at a constant voltage of 4.35 V until the current is $\leq$ 0.05 mA, allowed to stand for 5 min, and then discharged at 1C to 2.8 V; and the capacity $C_{discharge}$ of the battery is recorded.

The gram capacity = the capacity $C_{discharge}$ (mAh) of the battery/the mass (g) of the positive electrode active material.

4. High-temperature storage performance test

At 25°C, a battery is charged at a constant current rate of 0.33C to 4.35 V, then charged at the constant voltage until the current is less than or equal to 0.05 C, and then discharged at a constant current rate of 0.33C to 2.8 V, and the initial discharge capacity of the battery is measured. At 25°C, the battery is charged at a constant current rate of 0.33 C to 4.35 V and then charged at the constant voltage until the current is less than or equal to 0.05 C; and then the battery at a fully-charged state is stored in an oven at 60°C for 60 days. After 60 days of high temperature storage, the battery is taken out and naturally cooled to 25°C, discharged at a constant current rate of 0.33C to 2.8 V, then charged at a constant current rate of 0.33C to 4.35 V, then charged at the constant voltage until the current is less than or equal to 0.05C and then discharged at a constant current rate of 0.33C to 2.8 V, and the discharge capacity of the battery after 60 days of high temperature storage is measured.

The capacity retention rate (%) of a battery after 60 days of high-temperature storage = the discharge capacity after 60 days of high temperature storage/the initial discharge capacity $\times$ 100%

**III. Test results of examples and comparative examples**

The batteries of the examples and comparative examples are respectively prepared according to the method described above and various performance parameters thereof are measured. The results are shown in Table 2 below.

Table 2 Relevant performance of batteries of comparative examples and examples

| No. | 1/3C gram capacity test (mAh/g) | Number of cycles for capacity decaying to 80% at 60°C | Volume expansion rate at 75°C | Capacity retention rate after 60 days of storage at 60°C |
|---|---|---|---|---|
| 1 | 197 | 998 | 88% | 81% |
| 2 | 195 | 1120 | 86% | 83% |
| 3 | 190 | 1280 | 81% | 88% |
| 4 | 188 | 1300 | 79% | 90% |
| 5 | 187 | 1490 | 73% | 92% |
| 6 | 185 | 1507 | 69% | 93% |
| 7 | 196 | 890 | 88% | 77% |
| 8 | 195 | 808 | 90% | 75% |
| 9 | 196 | 790 | 91% | 72% |
| 10 | 196 | 1220 | 78% | 79% |
| 11 | 180 | 1190 | 81% | 85% |
| 12 | 186 | 1008 | 83% | 83% |

(continued)

| No. | 1/3C gram capacity test (mAh/g) | Number of cycles for capacity decaying to 80% at 60°C | Volume expansion rate at 75°C | Capacity retention rate after 60 days of storage at 60°C |
|---|---|---|---|---|
| 13 | 174 | 1070 | 79% | 84% |
| 14 | 173 | 1098 | 81% | 86% |
| 15 | 186 | 1160 | 75% | 85% |
| 16 | 187 | 1067 | 76% | 87% |
| 17 | 178 | 1080 | 75% | 85% |
| 18 | 173 | 990 | 80% | 82% |
| Comparative example 1 | 198 | 610 | 97% | 67% |
| Comparative example 2 | 197 | 968 | 96% | 69% |
| Comparative example 3 | 175 | 1580 | 70% | 92% |
| Comparative example 4 | 198 | 1011 | 90% | 72% |
| Comparative example 5 | 190 | 1270 | 85% | 73% |
| Comparative example 6 | 180 | 1380 | 86% | 80% |
| Comparative example 7 | 198 | 621 | 103% | 60% |
| Comparative example 8 | 177 | 1159 | 71% | 92% |

It can be seen from the above examples and comparative examples that when the proportion of the polycrystal high-nickel large particles is high, the gram capacity of the battery comprising a mixed positive electrode material is significantly improved; however, due to the problems such as the cracking of the particles under a high temperature condition, the serious mixed arrangement of lithium and nickel, the high-temperature performance of the battery is poorer, side reactions such as gas production are severe, leading to a higher volume expansion rate; and the higher the nickel content and the larger its proportion, the more obvious the above characteristics are. When the positive electrode active material comprises only a monocrystal low-nickel active material C (comparative example 3), there are less side reactions in the battery and the battery has a better high-temperature cycling performance and high-temperature storage performance. However, the demand for high energy density can not be satisfied. After mixing with a certain proportion of a monocrystal high-nickel active material B (comparative example 6), the energy density of the battery is still relatively low.

The mixed ternary positive electrode material obtained by means of appropriately adjusting, controlling and mixing A, B and C can effectively solve the problems of the high-nickel active materials during the cold pressing and cycling processes, such as particle breakage along grain boundaries, increase in the specific surface area, destruction of electron/ion transport paths, electrolyte solution corrosions; and the side reactions such as gas production during the high-temperature storage are reduced, such that the mixed positive electrode has not only a high capacity but also an excellent high-temperature performance.

It should be noted that the present application is not limited to the above embodiments. The above embodiments are exemplary only, and any embodiment within the scope of the technical solution of the present application that has substantially the same composition and has the same effects as the technical idea is encompassed in the technical scope of the present application. In addition, without departing from the gist of the present application, various modifications that may be conceived by those skilled in the art to the embodiments, and other modes constructed by combining some of the constituent elements of the embodiments are also encompassed in the scope of the present application.

**Claims**

1.  A positive electrode active material, comprising

    an active material A having a composition formula of

    $$Li_{x1}Ni_{a1}Co_{b1}Mn_{c1}O_{2-y1}Q_{y1} \qquad I$$

    wherein in formula I, $0.95 \leq x1 \leq 1.3$, $0.7 \leq a1 \leq 0.99$, $0.01 \leq b1 \leq 0.15$, $0.01 \leq c1 \leq 0.3$, $a1+b1+c1 = 1$, and $0 \leq y1 \leq 0.1$; and Q is one or more selected from S, N, F, Cl, Br and I;
    an active material B having a composition formula of

    $$Li_{x2}Ni_{a2}Co_{b2}Mn_{c2}O_{2-y2}Q_{y2} \qquad II$$

    wherein in formula II, $0.95 \leq x2 \leq 1.3$, $0.7 \leq a2 \leq 0.99$, $0.01 \leq b2 \leq 0.15$, $0.01 \leq c2 \leq 0.3$, $a2+b2+c2 = 1$, and $0 \leq y2 \leq 0.1$; and Q is one or more selected from S, N, F, Cl, Br and I; and
    an active material C having a composition formula of

    $$Li_{x3}Ni_{a3}Co_{b3}Mn_{c3}O_{2-y3}Q_{y3} \qquad III$$

    wherein in formula III, $0.95 \leq x3 \leq 1.3$, $0.3 \leq a3 < 0.7$, $0.01 \leq b3 \leq 0.15$, $0.01 \leq c3 \leq 0.5$, $a3+b3+c3 = 1$, and $0 \leq y3 \leq 0.1$; and Q is one or more selected from S, N, F, Cl, Br and I,
    wherein the active material A has an average particle size Dv50 greater than both the average particle size Dv50 of the active material B and the average particle size Dv50 of the active material C.

2.  The positive electrode active material according to claim 1, **characterized in that** the active material A has an average particle size Dv50 of 7-15 $\mu$m, optionally 8-14 $\mu$m, and a Dv90 of 15-25 $\mu$m, optionally 18-22 $\mu$m; the active material B has an average particle size Dv50 of 1-8 $\mu$m, optionally 2-5 $\mu$m, and a Dv90 of 3-10 $\mu$m, optionally 5-8 $\mu$m; and the active material C has an average particle size of 1-7 $\mu$m, optionally 2-5 $\mu$m, and a Dv90 of 5-10 $\mu$m, optionally 5-8 $\mu$m.

3.  The positive electrode active material according to claim 1 or 2, **characterized in that** the content ratio of the active material A, the active material B, and the active material C is 1 : 0.5-8 : 0.1-10, optionally 1 : 0.8-6 : 0.2-8, further optionally 1 : 1.5-6 : 3-8.

4.  The positive electrode active material according to any one of claims 1-3, **characterized in that** the sum of the contents of the active material A and the active material B equals to the content of the active material C, the content of each active material being based on the total weight of the positive electrode active material.

5.  The positive electrode active material according to any one of claims 1-4, **characterized in that** the positive electrode active material has a specific surface area of 0.3-1.8 m$^2$/g, and a compacted density of 3.0-3.6 g/cm$^3$.

6.  The positive electrode active material according to any one of claims 1-5, **characterized in that** the active material A and/or the active material B and/or the active material C comprise(s) an M element, wherein M is selected from one or more of Zr, Sr, B, Ti, Mg, Sn and Al.

7.  The positive electrode active material according to any one of claims 1-6, **characterized in that** in the chemical formula respectively corresponding to the active material A, the active material B, and the active material C, x1 : x2 : x3 is 1 : (0.73-1.37) : (0.73-1.37), and a1 : a2 : a3 is 1 : (0.71-1.42) : (0.31-1).

8.  The positive electrode active material according to any one of claims 1-7, **characterized in that** the active material A is a polycrystal material, and the active materials B and C are mono-like crystal or monocrystal materials.

9.  A secondary battery, **characterized by**
    comprising a positive electrode active material according to any one of claims 1-8.

10. A battery module, **characterized by** comprising a secondary battery according to claim 9.

**11.** A battery pack, **characterized by** comprising a battery module according to claim 10.

**12.** A power consuming device, **characterized by** comprising at least one selected from a secondary battery according to claim 9, a battery module according to claim 10, or a battery pack according to claim 11.

<u>5</u>

FIG. 1

<u>5</u>

FIG. 2

FIG. 3

1

FIG. 4

FIG. 5

FIG. 6

<table>
<tr><td colspan="2">**INTERNATIONAL SEARCH REPORT**</td><td colspan="2">International application No.<br>**PCT/CN2022/101030**</td></tr>
</table>

**A. CLASSIFICATION OF SUBJECT MATTER**

H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 正极, 阴极, 混掺, 掺混, 混合, 三元, 高镍, 镍, 含量, 粒径, 粒度, 直径, 尺寸, 大小, 不同, 密度, battery, positive, cathode, blend+, mix+, high, nickel, content, size, diameter, different, density

**C. DOCUMENTS CONSIDERED TO BE RELEVANT**

| Category* | Citation of document, with indication, where appropriate, of the relevant passages | Relevant to claim No. |
|---|---|---|
| X | CN 110098403 A (DENG LIPING) 06 August 2019 (2019-08-06)<br>description, paragraphs 3-56 | 1, 3-7, 9-12 |
| Y | CN 110098403 A (DENG LIPING) 06 August 2019 (2019-08-06)<br>description, paragraphs 3-56 | 2, 8 |
| Y | CN 111640912 A (LISHEN POWER BATTERY SYSTEMS CO., LTD.) 08 September 2020 (2020-09-08)<br>description, paragraphs 6-113 | 2, 8 |
| Y | CN 111883768 A (HEFEI GUOXUAN HIGH-TECH POWER ENERGY CO., LTD.) 03 November 2020 (2020-11-03)<br>description, paragraphs [0005]-[0068] | 2, 8 |
| Y | CN 109888235 A (GUANGDONG BRUNP RECYCLING TECHNOLOGY CO., LTD. et al.) 14 June 2019 (2019-06-14)<br>description, paragraphs 5-96 | 2, 8 |
| A | CN 113611841 A (NINGDE CONTEMPORARY AMPEREX TECHNOLOGY CO., LTD.) 05 November 2021 (2021-11-05)<br>entire document | 1-12 |

☑ Further documents are listed in the continuation of Box C.    ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **14 November 2022** | **25 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/101030** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 102163717 A (SAMSUNG SDI CO., LTD.) 24 August 2011 (2011-08-24)<br>        entire document | 1-12 |

Form PCT/ISA/210 (second sheet) (January 2015)

## INTERNATIONAL SEARCH REPORT
### Information on patent family members

International application No.

**PCT/CN2022/101030**

| Patent document cited in search report | | | Publication date (day/month/year) | Patent family member(s) | | | Publication date (day/month/year) |
|---|---|---|---|---|---|---|---|
| CN | 110098403 | A | 06 August 2019 | None | | | |
| CN | 111640912 | A | 08 September 2020 | None | | | |
| CN | 111883768 | A | 03 November 2020 | None | | | |
| CN | 109888235 | A | 14 June 2019 | None | | | |
| CN | 113611841 | A | 05 November 2021 | None | | | |
| CN | 102163717 | A | 24 August 2011 | KR | 20060091486 | A | 21 August 2006 |
| | | | | CN | 1822414 | A | 23 August 2006 |
| | | | | US | 2010019208 | A1 | 28 January 2010 |
| | | | | JP | 2006228733 | A | 31 August 2006 |
| | | | | US | 2006257745 | A1 | 16 November 2006 |
| | | | | US | 7608362 | B2 | 27 October 2009 |
| | | | | JP | 5213305 | B2 | 19 June 2013 |
| | | | | US | 8663846 | B2 | 04 March 2014 |